# EUROPEAN PATENT APPLICATION

(11) **EP 2 808 277 A1**
(43) Date of publication of application: **03.12.2014**
(21) Application number: 13174473.2
(22) Date of filing: 01.07.2013
(51) Int. Cl.: B65G 47/84, B05B 13/06

(54) **Transfer apparatus and method and internal lacquering system**

(30) Priority: 31.05.2013 EP 13170139
(71) Applicant: Mall + Herlan Italia Srl, 24068 Seriate (BG) (IT)
(72) Inventor: Persico, Sergio, Calcinate 24050 (IT); Vailati, Flavio, Caravaggio 24043 (IT)
(74) Representative: Eisenführ Speiser

(57) **Abstract**

The present invention relates to a transfer apparatus (3,5) for transfer to and/or from a processing machine (4), in particular an internal lacquering machine, for processing cylindrical containers with or without a closed bottom, in particular made of aluminium or steel, wherein the processing machine (4) comprises a holding dial (7) provided with holding elements (8) for holding the cylindrical containers, to a processing system (1) including such transfer apparatus (3,5)and to a corresponding transfer method and it is an object of the present invention to provide such transfer apparatus (3,5), which allows for transferring cylindrical containers with or without a closed bottom to a processing machine (4) the holding elements (8) of which having radially and tangentially fixed positions relative to the holding dial (7) and being equally distributed with a first mutual pacing on a circle with a reduced need for maintenance and/or cleaning.

## Description

The present invention relates to a transfer apparatus for transfer to and/or from a processing machine, in particular an internal lacquering machine, for processing cylindrical containers with or without a closed bottom (e.g. cans or cylindrical tubes or pipes), in particular made of aluminium or steel, wherein the processing machine comprises a holding dial provided with holding elements for holding the cylindrical containers, to a processing system including such transfer apparatus and to a corresponding transfer method.

A transfer device according to EP 1 132 207 A1 comprises a rotating transfer rotor for transferring hollow bodies to a spindle plate arranged on a printing machine, and holding devices arranged on the transfer rotor and defining receiving sites for the hollow bodies. The hollow bodies are transferred between the receiving sites of the holding devices of the transfer rotor and the receiving spindles of the spindle plate, wherein the corresponding trajectories thereof desired for the transfer are achieved by radially displacing both, the receiving spindles and the receiving sites.

DE 10 2011 081 590 A1 discloses a compact can transfer system having holding units and mandrel and transfer wheels rotationally driven around rotational axes that are parallel to each other, where a distance of one of the holding units is varied from minimum distance to maximum distance from rotational axis of the mandrel wheel. The other holding unit is pivotally fastened to the transfer wheel around a pivotal axis by a transfer swivel arm, where the pivotal axis extends parallel to the rotational axis of the transfer wheel and includes fixed distance from the rotational axis for each holding unit.

Such arrangements, however, are limited to processing machines which allow for a displacement of the receiving spindles, holding units or corresponding components at least in a radial way.

There is also a need for transferring cylindrical containers with or without a closed bottom to a processing machine the holding elements of which having radially and tangentially fixed positions relative to the holding dial and being equally distributed with a first mutual pacing on a circle.

Conventionally, cylindrical containers, for example for being internally lacquered, are transferred to such processing machines (e.g. internal lacquering machines) by means of chain conveyors. Such chain conveyors are, however, dissatisfactory in that they are in high need of maintenance and tend to contaminate the processing machines, e.g. due to grease needed for operation.

It is an object of the present invention to provide a transfer apparatus as indicated above, which allows for transferring cylindrical containers with or without a closed bottom to a processing machine the holding elements of which having radially and tangentially fixed positions relative to the holding dial and being equally distributed with a first mutual pacing on a circle with a reduced need for maintenance and/or cleaning.

In a first aspect of the present invention a transfer apparatus for transfer to and/or from a processing machine, in particular an internal lacquering machine, for processing cylindrical containers with or without a closed bottom, in particular made of aluminium or steel, wherein the processing machine comprises a holding dial provided with holding elements for holding the cylindrical containers, the holding elements having radially and tangentially fixed positions relative to the holding dial and being equally distributed with a first mutual pacing on a circle is presented, the transfer apparatus comprising: a plurality of transfer elements arranged on a transfer rotor, wherein each transfer element has a mounting axis perpendicular to the transfer rotor, the mounting axis extending through a mounting point of the transfer element on the transfer rotor, and a holding position of a held cylindrical container, wherein each transfer element is arranged for changing a distance between the mounting point and the holding position, wherein each transfer element is further pivotally arranged on the transfer rotor for being pivoted around the mounting axis, wherein the transfer apparatus is arranged, upon rotating the transfer rotor, for changing the distance between the mounting point and the holding position of a transfer element together with pivoting the transfer element such that a path of the holding position coincides with a path of a holding position of a corresponding holding element of the processing machine.

A further aspect of the present invention provides a processing system for cylindrical containers with or without a closed bottom, in particular made of aluminium or steel, comprising: a processing machine for processing the cylindrical containers, wherein the processing machine comprises a holding dial provided with holding elements for holding the cylindrical containers, the holding elements having radially and tangentially fixed positions relative to the holding dial and being equally distributed with a first mutual pacing on a circle, and at least a transfer apparatus according to the present invention for transferring the cylindrical containers to and/or from the holding dial of the processing machine.

In a yet further aspect of the present invention a transfer method for transfer to and/or from a processing machine, in particular an internal lacquering machine, for processing cylindrical containers with or without a closed bottom, in particular made of aluminium or steel, is presented, wherein the processing machine comprises a holding dial provided with holding elements for holding the cylindrical containers, the holding elements having radially and tangentially fixed positions relative to the holding dial and being equally distributed with a first mutual pacing on a circle, the transfer method comprising:
rotating a transfer rotor having a plurality of transfer elements, each transfer element having a mounting axis perpendicular to the transfer rotor, the mounting axis extending through a mounting point of the transfer element on the transfer rotor, and a holding position of a held cylindrical container, each transfer element being arranged for changing a distance between the mounting point and the holding position and being further pivotally arranged on the transfer rotor for being pivoted around the mounting axis, wherein the method further comprises, upon rotating the transfer rotor, changing a distance between the mounting point of a transfer element on the transfer rotor and the holding position together with pivoting the transfer element around the mounting axis, wherein the changing of the distance and the pivoting are provided such that a path of the holding position coincides with a path of a holding position of a corresponding holding element of the processing machine, wherein a cylindrical container is transferred between being held by the holding element and by the transfer element during the coinciding of the paths of the holding positions.

According to another aspect of the present invention a software product for controlling a transfer apparatus for transfer to and/or from a processing machine for cylindrical containers with or without a closed bottom is provided, the software product comprising program code means for causing a transfer apparatus to carry out the steps of the method according to the present invention when the software product is run on a transfer apparatus according to the present invention.

It shall be understood that the transfer apparatus of claim 1, the processing system of claim 9, the processing arrangement of claim 13, the transfer method of claim 14 and the computer program of claim 15 have similar and/or identical preferred embodiments, in particular, as defined in the dependent claims.

It shall be understood that a preferred embodiment of the invention can also be any combination of the dependent claims or above embodiments with the respective independent claim.

These and other aspects of the invention will be apparent from and elucidated with reference to the embodiments described hereinafter.

In the following drawings:
- Fig. 1: shows an overview in front sight of a processing system in accordance with an embodiment of the invention,
- Fig. 2: shows a perspective, partial cross section view of a transfer apparatus in accordance with an embodiment of the invention,
- Fig. 3: shows another partial perspective view of a transfer apparatus in accordance with an embodiment of the invention,
- Fig. 4: shows a schematic illustration of a processing arrangement in accordance with an embodiment of the invention,
- Fig. 5: shows a schematic flow diagram illustrating the transfer method in accordance with an embodiment of the invention.

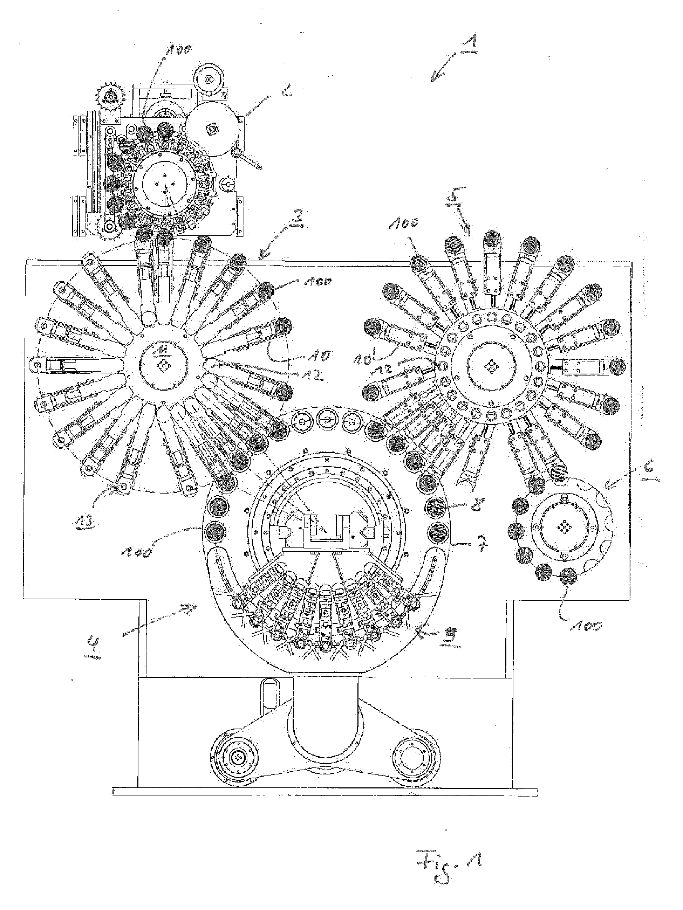

Fig. 1 shows an overview in front sight of a processing system 1 in accordance with an embodiment of the invention.

The processing system 1 is provided with an accumulator 2 of a production line for cans 100 (as an example of a cylindrical container with a closed bottom). Arranged next to the accumulator 2 there is a loading transfer apparatus 3 in the form of a vacuum loading star, which is arranged for transferring cans received from the accumulator 2 to the processing machine 4. For unloading the processing machine 4, there is provided an unloading transfer apparatus 5, which in turn is arranged next to an unloading portion 6 connected to the remainder of the production line (not shown).

The processing machine 4, in this case an internal lacquering machine 4, has a holding dial 7 provided with holding element or gripper 8 for holding the cans 100 and a lacquering portion 9 in which the internal lacquering of the cans 100 is provided. In general, the arrangement of the internal lacquering machine corresponds to conventional lacquering machines, so that a detailed description thereof may be omitted. However, differing from conventional lacquering machines, the lacquering portion 9 is provided in the lower part of the lacquering machine 9, which give the benefit that remains of oversprayed paints may be removed more easily.

In contrast to conventional systems, according to the present invention, the transfer loading and unloading is not done by means of a chain conveyor feeding to the gripper of the processing machine. In the described embodiment both, the loading and the unloading, are provided by means of transfer apparatuses 3, 5 according to the invention. However, the invention is not limited to such arrangement and it is also possible to provide the transfer apparatus only on the loading or on the unloading side, while otherwise conventional methods and means for unloading or loading are employed.

The loading transfer apparatus 3 includes a plurality of transfer elements 10 arranged on a transfer rotor 11. Each transfer element 10 has a mounting axis 12 (only partially shown). The mounting axes 12 of the plurality of transfer elements 10 each have a position fixed with respect to the transfer rotor 11, wherein these positions are equally distributed with a second mutual pacing on a circle, the center of which coincides with the center of the transfer rotor 11. Each transfer element 10 is arranged for changing a distance between the respective position of the mounting axis 12 and a respective holding position 13 at which the transfer element 10 holds a can 100 during the transfer process. Further, the transfer elements 10 may be pivoted around the mounting axis 12.

Accordingly, the transfer elements 10 allow for a movement of the holding positions 13 with respect to the transfer rotor 11 in a radial direction (by changing the distance to the mounting axis 12) as well as in a tangential direction (by pivoting the transfer elements 10 around the mounting axis 12).

The combination of these movements, which in the present embodiment are caused by an arrangement of cams and cam followers (see below), ensure that the path of a can 100 (or its holding position 13) during a clockwise rotation of the transfer rotor 11 corresponds to that of a respective holding element or gripper 8 (during a counter-clockwise rotation of the holding dial 7) for a sufficiently long period to transfer the can 100 from being held by the transfer element 10 to being held by the gripper 8. During this period, the cans 100 are respectively pushed axially (i.e. along the long axis of the can which is parallel to the mounting axis 12 of the transfer element 10) into the retaining grippers 8 that are placed on the transport plate or holding dial 7 of the machine.

In the illustrated embodiment, a corresponding combination of radial and tangential (or pivotal) movement is also provided for the transfer of cans 100 from the accumulator 2 to the transfer apparatus 3, i.e. for the receiving of the cans by the transfer elements 10 from the vacuum drum of the accumulator 2, even though other - conventional - methods for effecting such transfer may be used as well.

According to the present invention, the distance between the holding positions 13 where the cans 100 are placed is variable during rotation of the transfer rotor 11 (and the simultaneous rotation of the holding dial 7 or the vacuum drum of the accumulator 2) in order to adapt to the distance that the cans have on the vacuum drum of the accumulator and during the portion of angle of rotation where the transfer apparatus 3 copies the continuous movement of the holding dial 7.

The unloading of the cans 100 from the internal lacquering machine 4 by means of the unloading transfer apparatus 5 corresponds basically to the loading process, so that a further repetition of a description thereof may be omitted. However, differing from the transfer elements 10 of the loading transfer apparatus 3, the transfer elements 10' of the unloading transfer apparatus 5 are not provided for pushing a can 100 into a gripper or holding element 8 of the internal lacquering machine. It is nevertheless to be noted that also the loading transfer apparatus does not necessarily have to be provided for pushing if another (as such conventional) approach is taken for having a can taken over by the holding element or gripper 8 from the transfer element 10.

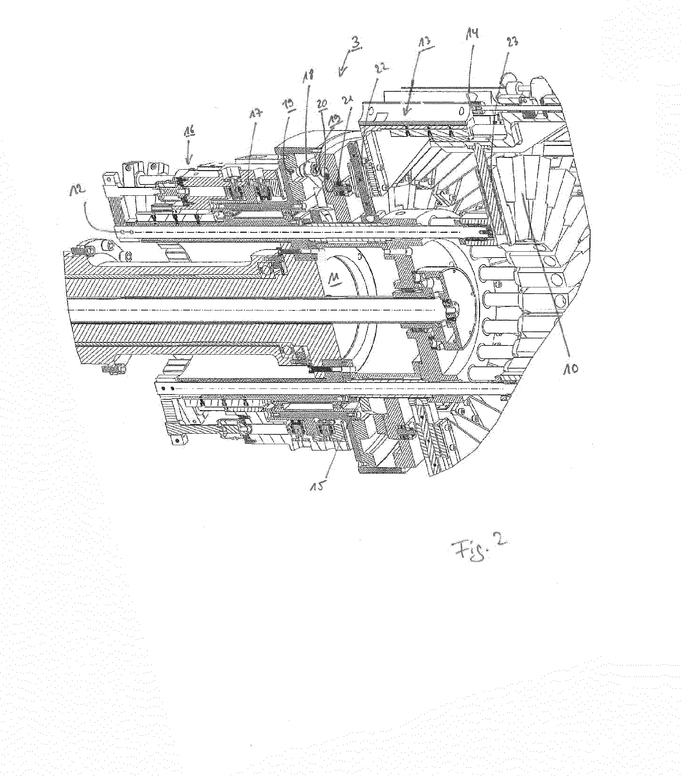

Fig. 2 shows a perspective, partial cross section view of a transfer apparatus in accordance with an embodiment of the invention.

The transfer apparatus 3 is a loading transfer apparatus 3 and is provided with pushers 14 for pushing a can (not shown) held in a holding position 13 of the respective transfer element 10 to be taken over by the gripper of the processing machine (not shown).

The transfer apparatus 3 includes the transfer rotor 11 on which a plurality of transfer elements 10 is mounted by means of mounting axes 12 held by the transfer rotor 11 in respective bearings 15 in such a way that the rotation axis of the transfer rotor 11 is parallel to the mounting axes 12. Each mounting axis 12 is further provided with a cam follower 16 for following a cam 17 provided on the transfer rotor 11 for controlling an axial movement (i.e. a movement parallel to the rotation axis of the transfer rotor 11 Such axial movement of the mounting axis 12 results in a corresponding movement of a part of transfer element 10.

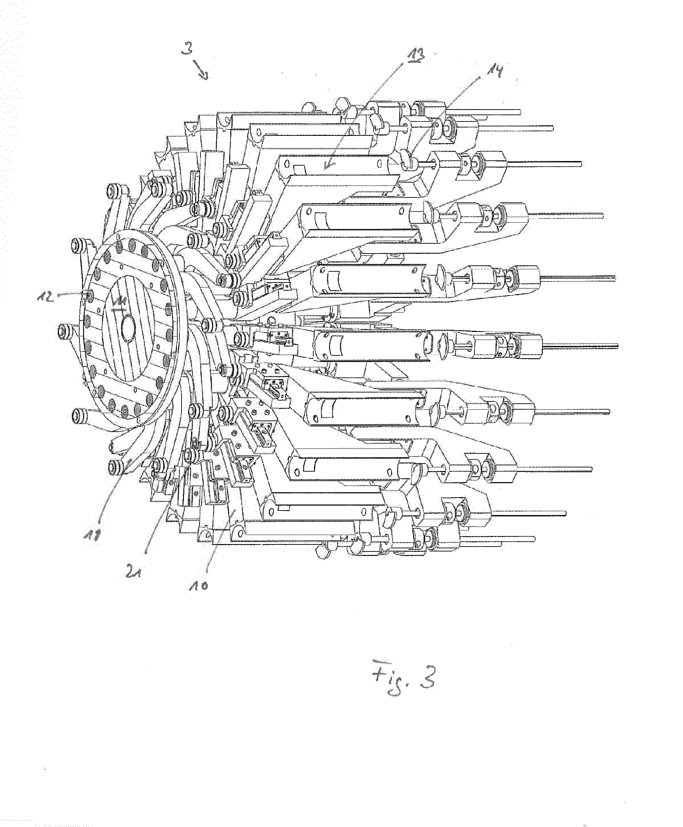

The transfer elements 10 are respectively mounted on their mounting axis 12 such a pivoting of the transfer element 10 around the mounting axis 12 is possible, wherein each transfer element 10 includes a lever arm 18 (see also Fig. 3) arranged to engage in either a front groove 19 or a back groove 19 provided on the transfer rotor 11. The engagement of the lever arm 18 (specifically a protrusion thereof) with the corresponding groove allows for a control of the pivotal position of the transfer element 10 with respect to the mounting axis 12.

Further, there is provided a further groove or cam 20 in which a cam follower or protrusion 21 of each transfer element 12 engages, wherein this arrangement allows in cooperation with bearings 22 and 23 for a radial movement of the holding position 13 with respect to the mounting axis 12 of each transfer element 10.

Fig. 3 shows another partial perspective view of a transfer apparatus in accordance with an embodiment of the invention.

In particular, Fig. 3 shows a different view of the loading transfer apparatus 3 shown in Fig. 2.

On the transfer rotor 11 (only partially illustrated) the plurality of transfer elements 10 are provided, each having a lever arm 21 with a protrusion for engaging in the cams or grooves (not shown in Fig. 3, see Fig. 2) of the transfer rotor 11, allowing for and controlling a pivoting of the transfer element 10 around its mounting axis 12 and a further cam follower or protrusion 21 for allowing for and controlling a radial movement of the holding position 13 of the transfer element 10.

The lever arms 18 are provided in a staggered manner, wherein alternating a lever arm 18 is provided for engaging into the back or the front groove 19 of the transfer rotor 11.

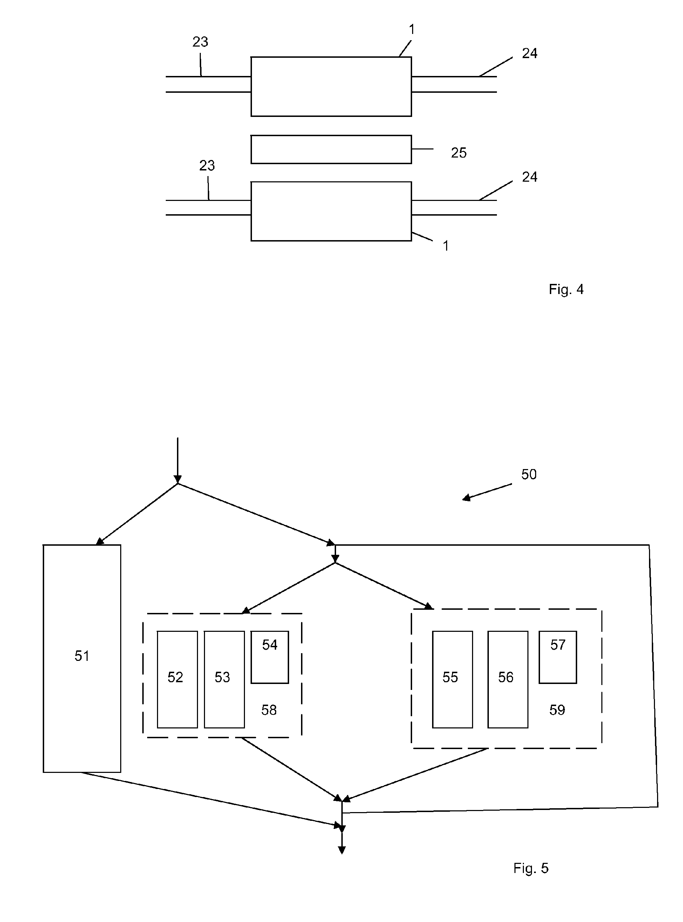

Fig. 4 shows a schematic illustration in top view of a processing arrangement in accordance with an embodiment of the invention.

The processing arrangement includes two processing systems 1 which are arranged facing each other, wherein a common operating control unit 25 is provided between the processing systems.

In the illustration of Fig. 4, cans to be processed are provided by means of feeding units 23 from the left, while processed cans are transported from the processing systems 1 by means of receiving units 24 to the right. Thus, there is a common upstream direction (here: from the left) and a common downstream direction (here: to the right) for the two processing systems.

Due to the processing systems 1 facing each other, control and supervision of these systems may be done simultaneously for both systems from the common operating control unit 25.

The two processing systems 1 of this embodiment are constructed in basically the same manner and nevertheless allow for being loaded from the left side (in the case of the processing system 1 shown in the upper part of Fig. 4) or from the right side (in the case of the processing system 1 shown in the lower part of Fig. 4) as seen from the common operating control unit 25.

Fig. 5 shows a schematic flow diagram illustrating the transfer method in accordance with an embodiment of the invention.

According to the transfer method 50 illustrated in Fig. 5, there is provided a rotating 51 of a transfer rotor having a plurality of transfer elements (see Fig. 1 to 3). Upon rotating 51 the transfer rotor, there are to processes taking place for a respective transfer element, i.e. a changing 52 of a distance between the mounting point of the transfer element on the transfer rotor and the holding position together with a pivoting 53 the transfer element around the mounting axis.

The changing 52 of the distance and the pivoting 53 are provided such that for a predetermined period or portion a path of the holding position of the transfer element coincides with a path of a holding position of a corresponding holding element of the processing machine (see Fig. 1 and above discussion). During at least a part of such coinciding, there is provided a transferring 54 of the can from being held at the holding position of the transfer element to being held by the holding element of the processing machine (or vice versa).

Typically partially temporally overlapping with this process 58 of changing 52, pivoting 53 and transferring 54 a further corresponding process 59 occurs for the next transfer element, also including a changing 55, a pivoting 56 and a transferring 57 in corresponding manner.

During the rotation, the overlapping of processes 58 and 59 is provided repeatedly, wherein the number of partially parallel or overlapping processes depends of the details and the arrangement of the particular embodiment.

In the case illustrated in Fig. 1, six transfer elements are simultaneously pivoted and have the distance of the holding position to the mounting axis changed, while four cans are shown during the coinciding of the paths.

While the invention has been illustrated and described in detail in the drawings and foregoing description, such illustration and description are to be considered illustrative or exemplary and not restrictive; the invention is not limited to the disclosed embodiments.

The discussion above with respect to the figures illustrating embodiments referred to the case that the cylindrical containers are cans (i.e. containers with a closed bottom). The invention is not to be understood as being limited to processing cylindrical containers like can (i.e. containers with a closed bottom), but also applies to cylindrical containers or bodies without a closed bottom, indeed to bodies likes tubes or pipes as well. The container may also have a partially closed bottom.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A computer program may be stored and/or distributed on a suitable medium, such as an optical storage medium or a solid-state medium, supplied together with or as part of other hardware, but may also be distributed in other forms, such as via the Internet or other wired or wireless telecommunication systems.

Any reference signs in the claims should not be construed as limiting the scope.

## Claims

1. A transfer apparatus for transfer to and/or from a processing machine, in particular an internal lacquering machine, for processing cylindrical containers with or without a closed bottom, in particular made of aluminium or steel, wherein the processing machine comprises a holding dial provided with holding elements for holding the cylindrical containers, the holding elements having radially and tangentially fixed positions relative to the holding dial and being equally distributed with a first mutual pacing on a circle, the transfer apparatus comprising:
a plurality of transfer elements arranged on a transfer rotor,
wherein each transfer element has a mounting axis perpendicular to the transfer rotor, the mounting axis extending through a mounting point of the transfer element on the transfer rotor, and a holding position of a held cylindrical container,
wherein each transfer element is arranged for changing a distance between the mounting point and the holding position,
wherein each transfer element is further pivotally arranged on the transfer rotor for being pivoted around the mounting axis,
wherein the transfer apparatus is arranged, upon rotating the transfer rotor, for changing the distance between the mounting point and the holding position of a transfer element together with pivoting the transfer element such that a path of the holding position coincides with a path of a holding position of a corresponding holding element of the processing machine.

2. The transfer apparatus according to claim 1,
wherein the transfer elements are provided for holding a cylindrical container by means of vacuum.

3. The transfer apparatus according to claim 1 or 2,
wherein the transfer apparatus is arranged for being used for transfer to and from the processing machine.

4. The transfer apparatus according to any one of claims 1 to 3,
wherein the transfer elements are provided with a pushing unit for pushing a cylindrical container held by the transfer element in a direction parallel to the mounting axis into the holding element of the processing machine.

5. The transfer apparatus according to any one of claims 1 to 4,
wherein each transfer element is provided with a lever having a first cam follower, the first cam follower arranged in a first cam defining the pivoting of the transfer element.

6. The transfer apparatus according to claim 5,
wherein the levers of two adjacent transfer elements are arranged in a staggered manner.

7. The transfer apparatus according to any one of claims 1 to 6,
wherein each transfer element is provided with a second cam follower, the second cam follower arranged in a second cam defining the distance-changing between the mounting point and the holding position of the transfer element.

8. The transfer apparatus according to any one of claims 1 to 7,
wherein the transfer elements are further arranged for an axial movement along the mounting axis and each transfer element has a third cam follower arranged in a third cam defining an axial movement of the transfer element.

9. A processing system for cylindrical containers with or without a closed bottom, in particular made of aluminium or steel, comprising:
a processing machine for processing the cylindrical containers, wherein the processing machine comprises a holding dial provided with holding elements for holding the cylindrical containers, the holding elements having radially and tangentially fixed positions relative to the holding dial and being equally distributed with a first mutual pacing on a circle,
at least a transfer apparatus according to any one of claims 1 to 8 for transferring the cylindrical containers to and/or from the holding dial of the processing machine.

10. The processing system according to claim 9,
wherein the system comprises a transfer apparatus according to any one for claims 1 to 8 for transferring the cylindrical containers to the holding dial and a further transfer apparatus according to any one of claims 1 to 8 for transferring the cylindrical containers from the holding dial.

11. The processing system according to claim 9 or 10,
wherein the processing machine is an internal lacquering machine for internally lacquering the cylindrical containers, comprising a set of spray guns for applying lacquer on an inside wall of the cylindrical containers.

12. The processing system according to claim 11,
wherein the two transfer apparatuses are arranged at positions higher than that of the set of spray guns.

13. A processing arrangement, comprising two processing systems according to any one of claims 9 to 12, wherein the two processing systems are arranged to face each other such that the processing system have a common upstream direction and a common downstream direction, wherein a common operating control unit is provided between the two processing systems.

14. Transfer method for transfer to and/or from a processing machine, in particular an internal lacquering machine, for processing cylindrical containers with or without a closed bottom, in particular made of aluminium or steel, wherein the processing machine comprises a holding dial provided with holding elements for holding the cylindrical containers, the holding elements having radially and tangentially fixed positions relative to the holding dial and being equally distributed with a first mutual pacing on a circle, the transfer method comprising:
rotating a transfer rotor having a plurality of transfer elements, each transfer element having a mounting axis perpendicular to the transfer rotor, the mounting axis extending through a mounting point of the transfer element on the transfer rotor, and a holding position of a held cylindrical container, each transfer element being arranged for changing a distance between the mounting point and the holding position and being further pivotally arranged on the transfer rotor for being pivoted around the mounting axis,
wherein the method further comprises, upon rotating the transfer rotor,
changing a distance between the mounting point of a transfer element on the transfer rotor and the holding position together with
pivoting the transfer element around the mounting axis,
wherein the changing of the distance and the pivoting are provided such that a path of the holding position coincides with a path of a holding position of a corresponding holding element of the processing machine,
wherein a cylindrical container is transferred between being held by the holding element and by the transfer element during the coinciding of the paths of the holding positions.

15. A software product for controlling a transfer apparatus for transfer to and/or from a processing machine for cylindrical containers with or without a closed bottom, the software product comprising program code means for causing a transfer apparatus to carry out the steps of the method as claimed in claim 14 when the software product is run on a transfer apparatus according to any one of claims 1 to 8.

## Amended claims

### Amended claims in accordance with Rule 137(2) EPC.

**1.** A transfer apparatus (3) for transfer to and/or from a processing machine (4), in particular an internal lacquering machine (4), for processing cylindrical containers (100) with or without a closed bottom, in particular made of aluminium or steel, wherein the processing machine (4) comprises a holding dial (7) provided with holding elements (8) for holding the cylindrical containers (100), the holding elements (8) having radially and tangentially fixed positions relative to the holding dial (7) and being equally distributed with a first mutual pacing on a circle, the transfer apparatus (3) comprising:
a plurality of transfer elements (10) arranged on a transfer rotor (11),
wherein each transfer element (10) has a mounting axis (12) perpendicular to the transfer rotor (11), the mounting axis (12) extending through a mounting point of the transfer element (10) on the transfer rotor (11), and a holding position (13) of a held cylindrical container (100),
wherein each transfer element (10) is arranged for changing a distance between the mounting point and the holding position (13),
wherein each transfer element (10) is further pivotally arranged on the transfer rotor (11) for being pivoted around the mounting axis (12),
wherein the transfer apparatus (3) is arranged, upon rotating the transfer rotor (11), for changing the distance between the mounting point and the holding position (13) of a transfer element (10) together with pivoting the transfer element (10) such that a path of the holding position coincides with a path of a holding position of a corresponding holding element (8) of the processing machine (4),
said apparatus (3) being **characterised in that**:
the transfer elements (10) are provided with a pushing unit (14) for pushing a cylindrical container (100) held by the transfer element (10) in a direction parallel to the mounting axis (12) into the holding element (8) of the processing machine (4).

**2.** The transfer apparatus (3) according to claim 1,
wherein the transfer elements (10) are provided for holding a cylindrical container (100) by means of vacuum.

**3.** The transfer apparatus (3) according to claim 1 or 2,
wherein the transfer apparatus (3) is arranged for being used for transfer to and from the processing machine (4).

**4.** The transfer apparatus (3) according to any one of claims 1 to 3,
wherein each transfer element (10) is provided with a lever having a first cam follower (16'), the first cam follower (16') arranged in a first cam (17') defining the pivoting of the transfer element (10).

**5.** The transfer apparatus (3) according to claim 4,
wherein the levers (18) of two adjacent transfer elements (10) are arranged in a staggered manner.

**6.** The transfer apparatus (3) according to any one of claims 1 to 5,
wherein each transfer element (10) is provided with a second cam follower (16"), the second cam follower (16") arranged in a second cam (17") defining the distance-changing between the mounting point and the holding position of the transfer element (10).

**7.** The transfer apparatus (3) according to any one of claims 1 to 6,
wherein the transfer elements (10) are further arranged for an axial movement along the mounting axis and each transfer element has a third cam follower (16"') arranged in a third cam (17"') defining an axial movement of the transfer element (10).

**8.** A processing system (1) for cylindrical containers (100) with or without a closed bottom, in particular made of aluminium or steel, comprising:
a processing machine (4) for processing the cylindrical containers (100), wherein the processing machine (4) comprises a holding dial (7) provided with holding elements (8) for holding the cylindrical containers (100), the holding elements (10) having radially and tangentially fixed positions relative to the holding dial (7) and being equally distributed with a first mutual pacing on a circle,
at least a transfer apparatus according to any one of claims 1 to 7 for transferring the cylindrical containers (100) to and/or from the holding dial (7) of the processing machine (4).

**9.** The processing system (1) according to claim 8,
wherein the system (1) comprises a transfer apparatus according to any one for claims 1 to 7 for transferring the cylindrical containers (100) to the holding dial (7) and a further transfer apparatus according to any one of claims 1 to 7 for transferring the cylindrical containers (100) from the holding dial (7).

**10.** The processing system (1) according to claim 8 or9,
wherein the processing machine (4) is an internal lacquering machine for internally lacquering the cylindrical containers (100), comprising a set of spray guns for applying lacquer on an inside wall of the cylindrical containers (100).

**11.** The processing system (1) according to claim 10,
wherein the two transfer apparatuses are arranged at positions higher than that of the set of spray guns.

**12.** A processing arrangement, comprising two processing systems (1) according to any one of claims 8 to 11, wherein the two processing systems (1) are arranged to face each other such that the processing system (1) have a common upstream direction and a common downstream direction, wherein a common operating control unit is provided between the two processing systems.

**13.** Transfer method for transfer to and/or from a processing machine (4), in particular an internal lacquering machine, for processing cylindrical containers (100) with or without a closed bottom, in particular made of aluminium or steel, wherein the processing machine (4) comprises a holding dial (7) provided with holding elements (8) for holding the cylindrical containers (100), the holding elements (8) having radially and tangentially fixed positions relative to the holding dial (7) and being equally distributed with a first mutual pacing on a circle, the transfer method comprising:
rotating a transfer rotor (11) having a plurality of transfer elements (10), each transfer element (10) having a mounting axis (12) perpendicular to the transfer rotor (11), the mounting axis (12) extending through a mounting point of the transfer element (10) on the transfer rotor (11), and a holding position (13) of a held cylindrical container (100), each transfer element (10) being arranged for changing a distance between the mounting point and the holding position (13) and being further pivotally arranged on the transfer rotor (11) for being pivoted around the mounting axis (12),
wherein the method further comprises, upon rotating the transfer rotor (12),
changing a distance between the mounting point of a transfer element (10) on the transfer rotor (11) and the holding position together with pivoting the transfer element around the mounting axis (12),
wherein the changing of the distance and the pivoting are provided such that a path of the holding position coincides with a path of a holding position (13) of a corresponding holding element of the processing machine (4),
wherein a cylindrical container (100) is transferred between being held by the holding element (8) and by the transfer element (10) during the coinciding of the paths of the holding positions (13),
**characterized in that** the transferring between being hold by the holding element (8) and by the transfer element (10) is provided by means of a pushing unit (14) pushing the cylindrical container (100) from the transfer element (10) in a direction parallel to the mounting axis (12) into the holding element (8).
